(19)

Europäisches
Patentamt
European
Patent Office
Office européen
des brevets

(11) **EP 4 231 223 A1**

(12) **EUROPEAN PATENT APPLICATION**
published in accordance with Art. 153(4) EPC

(43) Date of publication:
**23.08.2023 Bulletin 2023/34**

(21) Application number: **21879347.9**

(22) Date of filing: **11.10.2021**

(51) International Patent Classification (IPC):
**G06Q 40/04** *(2012.01)*

(52) Cooperative Patent Classification (CPC):
**G06Q 40/04**

(86) International application number:
**PCT/CN2021/123151**

(87) International publication number:
**WO 2022/078303 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.10.2020  CN 202011104069**
**13.12.2020  CN 202011457356**
**31.01.2021  CN 202110132451**

(71) Applicant: **Zhang, Dacheng**
**Beijing 100172 (CN)**

(72) Inventors:
• **CHEN, Jie**
**Changsha, Hunan 410008 (CN)**

• **ZHANG, Chao**
**Beijing 410301 (CN)**
• **HOU, Dianjie**
**Beijing 100172 (CN)**
• **WANG, Xin**
**Beijing 100172 (CN)**
• **GUO, Zichuan**
**Hachioji-shi, Tokyo 192--0014 (JP)**
• **LIANG, Yao**
**Beijing 100071 (CN)**
• **ZHANG, Dacheng**
**Beijing 100172 (CN)**

(74) Representative: **Ipey**
**Apex House**
**Thomas Street**
**Trethomas**
**Caerphilly CF83 8DP (GB)**

(54) **CONTRACT TRADING DEVICE**

(57)     An apparatus for contract transactions, comprising: a contract object manager, managing a contract exchange rate Ph of a first asset A to a second asset B; a margin determiner, configured to allow a user to select one of assets thereof as a transaction margin;
a transaction engine, configured to execute a transaction after receiving a transaction order from the user to the Ph;a position holding adjustment processor, configured to enable the amount of A, converted into by contract position holdings of the user, to be negatively correlated with the Ph, and the amount of B, converted into by the contract position holdings of the user, to be positively correlated with the Ph according to changes of the Ph; a transaction data memory, configured to store basic information of the user; and a liquidation processor, configured to initiate a liquidation to the user at a preset price.

FIG 1

EP 4 231 223 A1

**Description**

Claim of priority

This application claims priority to Chinese Patent Application No. 2020111040690 filed October 18, 2020, 202011457356X filed December 13, 2020 and 202011457356X filed January 31, 2021. The entire contents of the three Chinese patent applications are incorporated into this application by reference.

**TECHNICAL FIELD**

The present invention relates to the field of blockchain technology, in particular to an apparatus for contract transactions.

**BACKGROUND**

Blockchain technology has become more and more favored by companies in the fields such as finance and insurance due to its decentralization and information immutability. Especially recent years, decentralized finance (DEFI) has seen explosive growth. An AMM (Automated Market Maker) has risen rapidly in this wave of DEFI. However, liquidity mining users have to do opposite actions to the market as the AMM adopts a multi-asset pool having a liquidity mining mode, leading to loss of assets and data for the liquidity mining users. This insecurity of assets and data is usually called impermanent loss in the industry. Alexis Direr, a researcher at the University of Orleans in France, published a paper pointing out that impermanent loss may be permanent, and it is difficult to effectively reduce the impermanent loss by existing trading systems, which severely restricts the further development of DEFI.

To solve the above technical problems, reduce the impermanent loss, improve the security of assets and data, and achieve single asset mining for the liquidity mining users, embodiments of the present invention discloses an apparatus for contract transactions, comprising:

a contract object manager, wherein a contract object comprises a contract exchange rate Ph of a first asset A to a second asset B;
a margin determiner, configured to allow a transaction user to select one of assets thereof as a transaction margin;
a transaction engine, configured to execute a transaction after receiving a transaction order from the transaction user to the contract exchange rate Ph;
a spot market processor, available to acquire spot prices of the first asset A and the second asset B or a spot exchange rate Px of the first asset A to the first asset B by initiating a query request to a spot market server gateway;
a position holding adjustment processor, configured to enable the amount of the first asset A, converted into by contract position holdings of the transaction user, to be negatively correlated with the contract exchange rate Ph, and the amount of the second asset B, converted into by the contract position holdings of the transaction user, to be positively correlated with the contract exchange rate Ph in a continuous period of time according to changes of the contract exchange rate Ph; and
a transaction data memory, configured to store basic information of the transaction user. Optionally, the basic information of the transaction user comprises at least one of order information, position holding, asset amplification rate, and transaction records for the transaction user.

The apparatus further comprises a liquidation processor, configured to initiate a forced liquidation request to the transaction user at a preset liquidation price.

Through the apparatus, the contract position holdings of the transaction user can be adjusted in real time according to the changes of the contract exchange rate Ph, such that the impermanent loss of the users can be effectively reduced and the security of assets and data improved.

Optionally, the user position holding adjustment processor may be further configured to enable the amount of the first asset A, converted into by the contract position holdings of the transaction user, to decrease as the contract exchange rate Ph rises in a continuous period of time, and the amount of the second asset B, converted into by the contract position holdings of the transaction user, to decrease as the contract exchange rate Ph drops in a continuous period of time according to the changes of the contract exchange rate Ph.

Through the above design, regardless of whether the contract exchange rate Ph rises or falls, the impermanent loss of transaction user can be effectively reduced and the security of assets and data improved.

Optionally, the user position holding adjustment processor is configured to enable the amount of the first asset A, converted into by the contract position holdings of the transaction user, to keep as d times of $b/(Ph)^c$ in a continuous period of time according to changes of c power of Ph, wherein $0<|c|<1$, $b>0$, $d>0$, and b and c are preset constants.

Optionally, c= 0. 5 or -0. 5.

Further, an asset related to the transaction object can be selected as the transaction margin, such as the first asset A or the second asset B.

Preferably, the transaction margins of the transaction users are stable coins.

In addition, an asset irrelevant with the transaction object can be selected as a transaction margin, such as an asset C different from the first asset A and the second asset B, so that the transaction user can trade the exchange rate Ph of the first asset A to the second asset B without holding the first asset A or the second asset B.

Further, the apparatus further comprises an asset operational amplifier that feeds back an asset amplification rate of the transaction user to the liquidation processor, and the asset amplification rate of the transaction user is a ratio of the value of the contract position holdings of the transaction user to the value of the transaction user's margin; Preferably, an initial asset amplification rate of the transaction user is m0, satisfying $|((m0-1)/m0)^2 -(m0-2)/m0| <11. 11\%$.

The transaction engine further comprises a virtual pricing system, comprising a virtual asset C and a virtual asset D. The amount of the first asset A, converted into by the virtual value of C, is negatively correlated with the contract exchange rate Ph, and the amount of the second asset B, converted into by the virtual value of C, is positively correlated with the contract exchange rate Ph. The virtual value of D is positively correlated with the price of the first asset A or the second asset B. The transaction comprises determining a transaction price of the transaction user by the virtual pricing system.

Optionally, the apparatus further comprises a settlement system; and the settlement system is configured to close a position of transaction user on a settlement date in the contract. The settlement system comprises a settlement price calculation system; and the settlement price calculation system initiates an inquiry to a spot market server gateway before settlement, and then determines the settlement price according to the inquired spot exchange rate Px. Optionally, the apparatus further comprises a funding rate manager, configured to charge a funding rate to a long transaction user or a short transaction user at a fixed time.

A rate charging mode adopted by the funding rate manager comprises: the long transaction user may get the funding rate and the short transaction user may pay for the funding rate when the contract exchange rate Ph has a positive premium relative to the spot exchange rate; and the long transaction user may pay for the funding rate and the short transaction user may get the funding rate when the contract exchange rate Ph has a negative premium relative to the spot exchange rate. Through the above mode, the transaction user can always hold relevant positions without transferring positions through settlement. Optionally, the transaction object of the apparatus may comprise one or more of the exchange rate of bitcoin to stable coin, the exchange rate of ethereum to stable coin, and one stable coin to another stable coin. The stable coin comprises one or more of cryptocurrency USDT, USDC, PAX, TUSD, BUSD, DAI,DCEP,EURT,GYEN.

Further, the transaction data memory comprises a centralized database or a decentralized database. The centralized database comprises a distributed database. The decentralized database comprises a public blockchain.

The public blockchain comprises Ethereum, Polkadot, EOS (ENTERPRISE OPERATION SYSTEM), TRON, and cosmo.

The public blockchain also comprises a storage blockchain, and the storage blockchain is configured to store relevant data of the contract transaction.

The storage blockchain comprises IPFS and Storj.

The contract transaction system provided by the present invention can effectively reduce the impermanent loss, improve the security of assets and data for the users.

To achieve the above technical effects, one or more embodiments of the present invention further provide a method for contract transactions, comprising:

S1, monitoring a difference between a contract exchange rate Ph and a spot exchange rate Px;
S2, establishing a long position with a value of 0. 9V to 1. 1V to the contract exchange rate Ph in the apparatus when the difference is less than a preset value; and
S3, depositing the first asset A with the equivalent value of V/2 and the second asset B with the equivalent value of V/2 in the automatic market-making exchange asset pool A-B.

Optionally, the method further comprises:

S4, monitoring a liquidation price of the long position for the transaction user; and
S5, adding a margin to a contract account when the difference between the liquidation price and the spot price is less than a preset value.

In one embodiment, the method for the apparatus for contract transactions of the present invention further comprises:

S6, placing a long or short limit order at a contract exchange rate Py of the first asset A to the second asset B in the apparatus for contract transactions, wherein the amount of the orders is V contracts; and

S7, monitoring a transaction state of the limit order, and depositing the first asset A with the equivalent value of V/2 and the second asset B with the equivalent value of V/2 in the automatic market-making exchange asset pool A-B after the limit order is executed.

After the limit order is executed, the method further comprises:
S8, exchanging the available assets of the transaction user into the first asset A with the equivalent value of V/2 and the second asset B with the equivalent value of V/2.

In another embodiment of the present invention, an apparatus for contract transactions is disclosed, and comprises:

a contract object manager, wherein a contract object comprises a contract exchange rate Ph of first asset A to second asset B;

a margin determiner, configured to allow a transaction user to select one of assets thereof as a transaction margin;

an asset pool manager, configured to receive the first asset A and/or the second B to deposit in an asset pool;

a transaction engine, configured to execute a transaction between the transaction user and the asset pool after receiving a transaction order from the transaction user to the contract exchange rate Ph;

a spot market processor, available to acquire spot prices of the first asset A and the second asset B or a spot exchange rate Px of the first asset A to the second asset B by initiating a query request to a spot market server gateway;

a user position holding adjustment processor, configured to enable the amount of the first asset A, converted into by contract position holdings of the transaction user, to be negatively correlated with the contract exchange rate Ph, and the amount of the second asset B, converted into by the contract position holdings of the transaction user, to be positively correlated with the contract exchange rate Ph in a continuous period of time according to the changes of the contract exchange rate Ph;

a transaction data memory, configured to store basic information of the transaction user; and

an asset pool position holding adjustment processor, configured to initiate a forced increase or decrease of the contract position holdings when the contract exchange rate reaches a preset value.

Optionally, the user position holding adjustment processor is configured to enable the amount of first asset A, converted into by contract position holdings of the transaction user, to keep as d times of $b/(Ph)^c$ in a continuous period of time according to changes of c power of the contract exchange rate Ph, wherein $0<|c|<1$, $b>0$, $d>0$, and b and c are preset constants.

In one embodiment, the apparatus further comprises a voucher generator, configured to generate a first voucher after the asset pool manager receives a deposit of the first asset A or the second asset B, or generate a second voucher after a transaction is established between the transaction user and the asset pool, wherein the amount of the first voucher is positively correlated with the amount of the first asset A or the second asset B in the asset pool, the first voucher is configured as a voucher for initiating a withdrawal request to the asset pool, the amount of second voucher is positively correlated with the transaction user's and the asset pool's contract position holdings in a continuous period of time, and the second voucher is configured as a voucher for releasing the transaction user's margin. Optionally, the amount of asset represented by the first voucher converted into the second asset B is greater than or equal to the amount of contract position holdings represented by the second voucher converted into the second asset B.

Optionally, the apparatus further comprises a voucher burner; configured to burn the first voucher or the second voucher after a voucher holder initiates a withdrawal request to the apparatus.

BRIEF DESCRIPTION OF THE DRAWINGS

FIG. 1 illustrates a working schematic diagram according to an embodiment of the present invention;

FIG. 2 illustrates an effect diagram of an apparatus for contract transactions according to an embodiment of the present invention;

FIG. 3 illustrates an effect diagram of an apparatus for contract transactions according to another embodiment of the present invention;

FIG. 4 illustrates a working schematic diagram of an apparatus for contract transactions according to another embodiment of the present invention; and

FIG. 5 illustrates a schematic diagram of a virtual pricing system.

**DETAILED DESCRIPTION**

Embodiments of the present invention will be described in detail below with reference to the accompanying drawings. It should be understood that the following embodiments are only for illustrating and explaining the present invention, and do not limit the present invention.

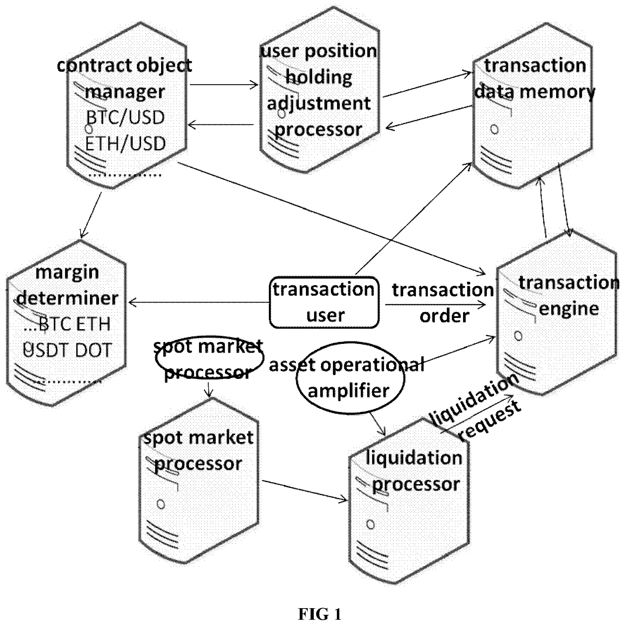

As shown in FIG. 1, in an embodiment of the present invention, an apparatus for contract transactions is provided, and comprises a contract object manager, a margin determiner, a transaction engine, a spot market processor, a user position holding adjustment processor, and a liquidation processor.

In the contract object manager, a contract object comprises a contract exchange rate Ph of a first asset A to a second asset B.

The contract exchange rate Ph is the price of the first asset to a base asset to the price of the second asset to the base asset, namely Ph=PhA/PhB.

The margin determiner is configured to allow a transaction user to select one of assets thereof as a transaction margin.

Here, the transaction user's margin is not limited to the first asset A or the second asset B, and may also be other assets, such as AB.

The transaction engine is configured to execute a transaction after receiving a transaction order from the transaction user to the contract exchange rate Ph.

The transaction user comprises long buyers or short sellers.

The spot market processor is available to acquire spot prices of the first asset A and the second asset B or a spot exchange rate Px of the first asset A to second asset B by initiating a query request to a spot market server gateway. Optionally, the spot exchange rate Px is equal to the contract exchange rate Ph.

The spot market server may be either a centralized exchange, such as Binance, Huobi or OKEX, or a decentralized exchange, such as Uniswap, Curve, SushiSwap, Balancer or Kyber Network. For details, please refer to https://debank. com/ranking/dex. Of course, the spot market server is not limited to an exchange. It may also be a third-party quotation platform that provides quotations, such as tradingview and aicoin, or acquires spot price information from a blockchain-based oracle, such as Link, etc.

The spot exchange rate Px is a ratio of the spot price of the first asset A, PxA, to the spot price of the second asset B, PxB, that is, Px=PxA/PxB. Generally, Px=Ph in a spot amplification contract, and Ph may deviate from Px in a future amplification contract. The price in the present invention refers to a ratio of the exchange amount of the first asset A and the second asset B related to the transaction object.

The user position holding adjustment processor is configured to enable the amount of the first asset A, converted into by the contract position holdings of the transaction user, to be negatively correlated with the contract exchange rate Ph, and the amount of the second asset B, converted into by the contract position holdings of the transaction user, to be positively correlated with the contract exchange rate Ph in a continuous period of time according to the changes of the contract exchange rate Ph

The transaction data memory is configured to store basic information of the transaction user, wherein the basic information comprises at least one of order information, a position holding state, a asset amplification rate, and transaction records. The transaction data memory may further be configured to store market data, and the like.

The liquidation processor is configured to initiate a forced liquidation request to a transaction user at a preset liquidation price.

The preset liquidation price is a set price when the user opens a position, not the price computed in real time.

In one embodiment, the time between the initiation of the liquidation request and the position opening by the user is longer than or equal than the continuous period of time. The transaction user can trade the changes of exchange rate for multiple assets while holding a single margin asset through the apparatus, which is equivalent to holding multiple assets at the same time. With the position holding adjustment processor, the transaction user can dynamically adjust the position holdings of the first asset A and the second asset B according to the changes of the contract exchange rate Ph, so that the loss of multi-asset holding for the automated market maker can be effectively reduced.

In order to better adapt to market changes and effectively reduce the above loss, the user position holding adjustment processor is further configured to enable the amount of the first asset A, converted into by the contract position holdings of the transaction user, to increase as the contract exchange rate Ph drops in a continuous period of time, and the amount of the second asset B, converted into by the contract position holdings of the transaction user, to increase as the contract exchange rate Ph rises in a continuous period of time. Or, the user position holding adjustment processor is further configured to enable the amount of the first asset A, converted into by the contract position holdings of the transaction user, to decrease drops as the contract exchange rate Ph rises in a continuous period of time, and the amount of the second asset B, converted into by the contract position holdings of the transaction user, to decrease as the contract exchange rate Ph drops in a continuous period of time.

It is noted that the long or short transaction users' position holdings is sustainable in the continuous period of time. For example, the position holding time of the transaction user is longer than the time of one block of the blockchain for the automated market maker. The contract position holdings of the long or short transaction users should satisfy the above relationship in the continuous period of time.

In order to reduce the above loss more accurately, the user position holding adjustment processor is configured to enable the amount of the first asset A, converted into by the contract position holdings of the transaction user, to keep as d times of $b/(Ph)^c$ in a continuous period of time according to the changes of c power of Ph, wherein $0<|c|<1$, $b>0$, $d>0$, and b and c are preset constants.

Optionally c=0. 5, d=1. Here uniswap is taken as an example below to explain in detail how the apparatus reduces impermanent loss or achieving single asset mining. As we all know, Uniswap is based on a constant product automated market maker formula (xy=k). Each of the asset pools comprises two assets of a first asset A and a second asset B.

Here is an example of the asset pool composed of digital currency ETH for the first asset and a digital currency USDT for the second asset, but the present invention is not limited by specific types. If amount of the digital currency ETH in the asset pool is x and the amount of the digital currency USDT is y, the asset pool ETH-USDT satisfies y=k/x excluding trading fee; and thus, the actual exchange price P of the trader is

$$|\varDelta y/\varDelta x|,$$

and |

$$\varDelta y/\varDelta x|=|dy/dx|=|y\ '|=k/x^2,$$

i. e. $x=(k/P)^0. 5$.

Suppose a liquidity mining provider using the apparatus for contract transactions wants to hold the digital currency ETH for a long time, and meanwhile earn trading fee and rewards in AMM. However, there is no effective method in related technologies. When the price of digital currency ETH rises, the automated market maker will lose the digital currency ETH, and when the price drops, the digital currency USDT will be lost. The lost of asset is the so-called impermanent loss. In order to facilitate user operations, $b/(Ph)^c$ ETH is set between the equivalent values of US\$ 0. 1 to US\$ 1,000. In one embodiment, the parameters in the apparatus for contract transactions of the present invention are set to b=1 and c=0. 5, wherein b and c are same for each transaction user. In this way, the contract position holdings of each transaction user can be divided into multiple contracts, and the absolute value of the single contract is maintained at $1/(Ph)^0. 5$ ETH.

Since $1/(Ph)^0. 5$ has a negative correlation with the price, in order to be the same as the actual market trend, the value of the single contract is defined as $-1/(Ph)^0. 5$ ETH. At this time, the contract value will increase with the price rises, which is in line with market rules. Thus, a requirement that the contract position holdings of the transaction user, converted into the amount of the first asset A, remain d times of $b/(Ph)^c$ for a continuous period of time can also be met. When the price of ETH/USDT is P0, the market maker deposits x0 ETH and y0 USDT into the Uniswap asset pool ETH-USDT, and longs $L=2x0*(P0)^0. 5$ contracts by the apparatus of the present invention. In other words, the market maker holds -2x0 ETH at this time. When the price of ETH/USDT moves to Pn:

$$2*x0(P0/Pn)^0. 5-2x0+2x0-2x0*((P0)^0. 5)*\ 1/(Pn)^0. 5=0$$

it will satisfy in the Uniswap:

$$x0=(k/P0)^0. 5,$$

$$xn=(k/Pn)^0. 5.$$

The profit and loss changes of ETH in the Uniswap is: $2xn-2x0=2*x0(P0/Pn)^0. 5-2x0$. Under the control of the user position holding adjustment processor, the positions of ETH held by the liquidity mining user using the apparatus for contract transactions of the present invention is adjusted to $-2x0*((P0)^0. 5)*\ 1/(Pn)^0. 5$.

The profit and loss change of ETH of the liquidity mining user using the apparatus for contract transactions is:

$2x0-2x0*((P0)^0.5)*1/(Pn)^0.5.$

As a result, the net profit and loss of ETH held by the market maker at this time is $2*x0(P0/Pn)^0.5-2x0+2x0-2x0*((P0)^0.5)*1/(Pn)^0.5=0.$

It can be seen that the net profit and loss of the market maker is zero no matter how the price of ETH fluctuates, which means that the apparatus of the present invention almost completely reduces the impermanent loss. Therefore, the market maker can hold ETH for a long time without loss and also earn the market making fees and token rewards, which is equivalent to achieve a single asset for liquidity mining.

In one embodiment, if the market making wants to hold USDT, he can choose to go short the equivalent of 2x0 ETH by a reverse contract (quote-asset margin contract) in existing exchange. Therefore, the market maker can hold USDT for a long time without loss and also earn the market making fees and token rewards.

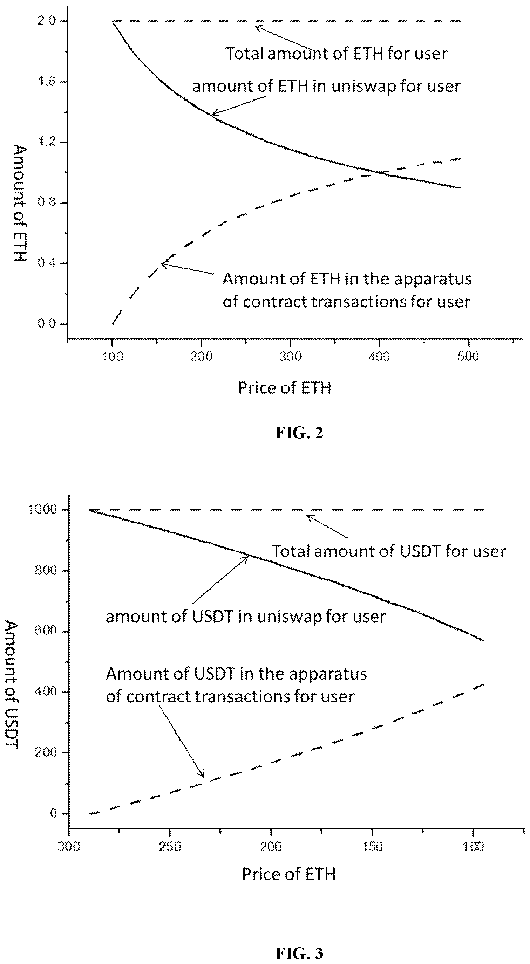

In order to more intuitively reflect reduction of impermanent loss of the market maker, we back-test the data from March 16, 2020 to September 1, 2020 in one embodiment. The market maker deposited equivalent value of two ETHs to Uniswap on March 16, 2020. FIG. 2 shows that the price of ETH has raised from US$100 to US$490. If the market maker only performed market making (liquidity mining) in Uniswap, the amount of ETH has dropped from 2 to 0.903507903. It has been reduced by more than half of the initial of the value. It is unacceptable for users who want to hold ETH for a long time. From the beginning, the market maker choses to transaction in the apparatus, and their net ETH amount has been maintained at 2 ETHs unchanged, indicating that the apparatus has completely reduced the above loss, achieved single sided liquidity mining, and improve the security of assets and data for these users of maket maker .

In one embodiment, the user position holding adjustment processor is further configured to enable the amount of the second asset B, converted into by the contract position holdings of the transaction user, to keep as d times of $b/(Ph)^c$ in a continuous period of time according to the changes of c power of Ph, wherein $0<c<-1$, $b>0$, $d>0$, and b and c are preset constants. As a result, the amount of the second asset B converted into by the position holdings of the transaction user will be consistent with the price change.

In one embodiment, $c=-0.5$ and $b=1$ are selected. That is, the amount of the second asset B converted into by each contract is $(Ph)^0.5$. Generally, the size $b/(Ph)^c$ USDT is set between the equivalent of US$ 0.1 to US$ 1,000 with b and c. Thus, the apparatus of the contract transactions can run on blockchain better to avoid data overflow.

When the price of ETH/USDT is P0, the liquidity mining user deposits x0 ETH and y0 USDT into the Uniswap asset pool ETH-USDT and does short $L=2y0/(P0)^0.5$ contracts by the apparatus of the present invention. In other words, the liquidity provider holds 2y0 USDT short order at this time. When the price of ETH/USDT moves to Pn:

it will satisfy in Uniswap:

$$x0=(k/P0)^0.5,$$

$$xn=(k/Pn)^0.5,$$

$$y0=(kP0)^0.5,$$

$$yn=(kPn)^0.5,$$

and

$$yn=y0*(Pn/P0)^0.5.$$

The change of USDT of the liquidity mining user in the Uniswap is $2yn-2y0=2y0*(Pn/P0)^0.5-2y0$.

The change of USDT of the liquidity mining user using the apparatus of the contract transactions of the present invention is $2y0-(2y0/(P0)^0.5)*(Pn)^0.5$.

The profit and loss change of USDT of the liquidity mining user using the apparatus for contract transactions is $2y0*(Pn/P0)^0.5-2y0+2y0-2y0/(P0)^0.5*(Pn)^0.5=0$.

It can be seen that the net profit and loss of the market maker is zero no matter how the price of USDT fluctuates, which means that the apparatus of the present invention almost completely reduces the impermanent loss. Therefore, the market maker can hold USDT for a long time without loss and also earn the market making fees and UNI token rewards, which is equivalent to achieve a single asset for liquidity mining and improve the security of assets and data for the user.

In order to more intuitively reflect reduction of impermanent losses, In FIG. 3, we back-test the data from February 15, 2020 to March 13, 2020 in one embodiment. The liquidity provider deposited equivalent value of 1000USDT to the Uniswap pool ETH-USDT on February 15, 2020. FIG. 3 shows that the price of ETH has dropped from US$290 to US$85. If the liquidity provider only performed market marking in theUniswap, during the period, the loss range of USDT was high as 43%, and the net USDT during the period remained unchanged at US$1000, indicating that the apparatus of the present invention can completely reduce the impermanent loss, achieved single sided liquidity mining, and improve the security of assets and data for the user.

Therefore, the apparatus is also configured to compute the change of the transaction user's margin converted into the first asset A or the second asset B according to $L*(P2^{0.5}-P1^{0.5})$, wherein P1 is a contract exchange rate of the first asset A to the second asset B at a first moment, P2 is a contract exchange rate of the first asset A to the second asset B at a second moment, and L is the amount of the contract position holdings of the transaction user in the apparatus.

$$L(Pn^{0.5} - Pq^{0.5}) = u0*(Pn^{0.5} - Pq^{0.5}) /(P0^{0.5}-Pq^{0.5})。$$

Pq is a liquidation price and P0 is an opening price of the transaction user; and m0 is an opening asset amplification rate, and the change of transaction user's contract margin from price P0 to Pq is:

$$u0= L (P0^{0.5}-Pq^{0.5}).$$

The margin u of the transaction user at the price Pn is:

$$u=L(Pn^{0.5}–Pq^{0.5}) = u0*(Pn^{0.5}–Pq^{0.5}) /(P0^{0.5}-Pq^{0.5}).$$

In one embodiment, the transaction margin is selected as a first asset A or a second asset B; In one embodiment, the transaction margins of the transaction users are all stable coins.

In one embodiment, a third asset AB different from the first asset A or the second B may be selected. As a result, the transaction user can trade the exchange rate the first asset A to the second asset B without holding the first asset A and the second asset B. For example, the first asset A is a digital currency BTC, and the second asset B is a digital currency USDT, the third asset AB is the digital currency ETH, so the transaction user can trade the digital currency BTC/USDT exchange rate by holding the digital currency ETH.

In one embodiment, the apparatus further comprises an asset operational amplifier. The asset operational amplifier is configured to feed back the asset amplification rate of the transaction user to the liquidation processor, and the asset amplification rate of the transaction user is a ratio between the value of the contract position holdings and the value of the margin. The apparatus of the present invention provides 1 to 1000 times amplification transaction. The transaction user can trade much more with little margin achieving higher capital efficiency without borrow, which means that the value of the contract position holdings is larger than the value of margin, and the changes of the value of the contract position holdings is equal to the changes of the value of margin, and thus, it allows traders to speculate an asset's price movement without holding the asset itself. The contract position holdings in the present invention refers to a virtual asset corresponding to the contract object, so the change of value of the transaction user's contract position holdings will be equal to the change of value of the transaction user's contract margin.

If the transaction user chooses to transaction in the apparatus of the present invention, he can take out about little of his funds (for example 10%) to open position in the apparatus, which greatly increases capital efficiency.

In order to ensure the similarity between the apparatus and a traditional apparatus for contract transactions, the initial asset amplification rate of the transaction user is configured as m0. Preferably, $|((m0-1)/m0)^2 - (m0-2)/m0|$ <11. 11%,wherein $((m0-1)/m0)^2$ is equal to a ratio of a first set price Pq to a second set price P0 in the apparatus and $(m0-2)/m0$ is equal to a ratio of a first set price Pq to a second set price P0 in the traditional apparatus for contract transactions.

Compared with the automatic market maker system by setting the price range from 0 to infinity for all users in the priot art, the embodiment by setting a different price range of from Pq to P0 for the the transaction users ensures the security of the system and the freedom of the transaction users.

Optionally, the first set price is the liquidation price, and the second price P0 is the opening price for the transaction user. The smaller for the difference of $|((m0-1)/m0)^2 - (m0-2)/m0|$ is, the closer between the apparatus and the traditional apparatus is.

To avoid the loss of liquidation when the price crosses the liquidation price, the asset operational amplifier feeds back the transaction user's asset amplification rate to the liquidation processor in real time. When the amplification rate is too high, it can also send a reminder to the transaction user. It will issue a forced liquidation order to the transaction engine when the asset amplification rate is higher than a preset value, that is, the user's position will be liquidated.

$$m = m0*Pn^{0.5}*(P0^{0.5} + m0(Pn^{0.5} - P0^{0.5}))。$$

When the second set price is the first price Pn, then:

$$Pq/P0 = ((m0-1)/m0)^2,$$

and

$$Pq/Pn = ((m-1)/m)^2.$$

The asset operational amplifierapparatus is further configured to enable the asset amplification rate of the transaction user at the first price Pn to be $m = m0*Pn^{0.5}/(P0^{0.5} + m0(Pn^{0.5} - P0^{0.5}))$.

In one embodiment, the apparatus further comprises a virtual pricing system, comprising a virtual asset C and a virtual asset D. The amount of a first asset A, converted into by the virtual value of the virtual asset C, is negatively correlated with the contract exchange rate Ph, and the amount of a second asset B, converted into by the virtual value of the virtual asset C, is positively correlated with the contract exchange rate Ph. The virtual value of the virtual asset D is positively correlated with the price of the first asset A or the second asset B. The transaction comprises determining the transaction price of the transaction user by the virtual pricing system. Preferably, the amount of virtual asset C is x, and the amount of virtual asset D is y, which satisfy xy=k, wherein k is a constant.

In one embodiment, the apparatus further comprises a settlement system, configured to close a position of the transaction user on a settlement date in the contract. In this way, the apparatus can provide a fixed-term contract products forcibly delivered at a fixed time.

In order to determine a settlement price, the settlement system comprises a settlement price calculation system, wherein the settlement price calculation system initiates an inquiry to the spot market server gateway before settlement, and determines the settlement price according to the inquired spot exchange rate Px.

The spot market server may be either a centralized exchange, such as Binance, Huobi or OKEX, or a decentralized exchange, such as Uniswap, Curve, SushiSwap, Balancer or Kyber Network. For details, please refer to https://debank. com/ranking/dex. Of course, the spot market server is not limited to an exchange. It may also be a third-party quotation platform that provides quotations, such as tradingview, aicoin, etc. , or acquires spot price information from a blockchain-based oracle, such as Link, etc.

In one embodiment, the apparatus further comprises a funding rate manager, configured to charge a funding rate to a long transaction user or a short transaction user at a fixed time. Optionly, a rate charging mode adopted by the funding rate manager comprises: the long transaction user may get the funding rate and the short transaction user may pay for the funding rate when the contract exchange rate Ph has a positive premium relative to the spot exchange rate; and the long transaction user may pay for the funding rate and the short user may get the funding rate when the contract exchange rate Ph has a negative premium relative to the spot exchange rate. Through the above mode, the transaction user can always hold relevant positions without transferring positions through settlement.

In one embodiment, the transaction object of the apparatus may optionally comprise one or more of the exchange rate of bitcoin to stable coin, the exchange rate of ethereum to stable coin and one stable coin to another stable coin.

The stable coin comprises cryptocurrency USDT, USDC, PAX, TUSD, BUSD, DAI, DCEP, EURT and GYEN.

Further, the transaction data memory comprises a centralized database or a decentralized database.

The centralized database comprises one or more of mysql, SQL Server, Oracle,Sybase and DB2.

To improve the efficiency and security of data storage, the centralized database comprises

a distributed database;
the decentralized database comprises a public blockchain;
the public blockchain comprises one or more of Ethereum, Polkadot, EOS (ENTERPRISE OPERATION SYSTEM), TRON, and cosmo;
the public blockchain also comprises a storage blockchain, and the storage blockchain is configured to store the data of contract transaction; and
the storage blockchain comprises IPFS or Storj.

In one embodiment, the executable programs run in the apparatus of the present invention comprises at least one of the following: the contract object manager, the margin determiner, the transaction engine, the spot market processor, the user position holding adjustment processor and the liquidation processor.

In one embodiment, the executable programs run in a cloud server such as Amazon AWS, Alibaba Cloud, and Tencent Cloud.

In one embodiment, the executable programs may also run in a public blockchain such as Ethereum, Polkadot, EOS (ENTERPRISE OPERATION SYSTEM), TRON, and Cosmo When running on the blockchain, one embodiment of the present invention also provides a blockchain system. The blockchain system is configured to participate in or trigger the execution of executable programs in the apparatus, wherein the executable programs run in at least one of the following: the contract object manager, the margin determiner, the transaction engine, the spot market processor, the user position holding adjustment processor and the liquidation processor.

In one embodiment, the present invention further provides a method for contract transactions, comprising:

S1, monitoring a difference between a contract exchange rate Ph and a spot exchange rate Px;
S2, establishing a long contract with a value of 0. 9V to 1. 1V to the contract exchange rate Ph in the apparatus when the difference is less than a preset value; and
S3, depositing the first asset A with the equivalent value of V/2 and the second asset B with the equivalent value of V/2 in the automatic market-making exchange asset pool A-B.

Optionally, the method further comprises:

S4, monitoring a liquidation price of the long contract; and
S5, adding a margin to a contract account when the difference between the liquidation price and the spot price is less than a preset value.

In one embodiment, the method for the apparatus for contract transactions of the present invention further comprises:

S6, placing a long or short limit order at a contract exchange rate Py of the first asset A to the second asset B in the apparatus for contract transactions, wherein the amount of the orders is V contracts; and
S7, monitoring a transaction state of the limit order, and depositing the first asset A with the equivalent value of V/2 and the second asset B with the equivalent value of V/2 in the automatic market-making exchange asset pool A-B after the limit order is executed.

After the limit order is executed, the method further comprises:
S8, exchanging the available assets of the transaction user into the first asset A with the equivalent value of V/2 and the second asset B with the equivalent value of V/2.

Where V is a positive integer, using this transaction method can effectively reduce the slippage loss when the blockchain is congested.

In one embodiment, the present invention further provides a method for contract transactions executed by an apparatus for contract transactions consisting of at least one processor, wherein the method comprises:

determining a contract object by a contract object manager, wherein the contract object comprises a contract exchange rate Ph between a first asset A and a second asset B;
acquiring spot prices of the first asset A and the second asset B or a spot exchange rate Px of the first asset A to the second asset B by a spot market processor;
executing a transaction between transaction users for the contract exchange rate Ph by a transaction engine;
adjusting the amount of the first asset A, converted into by contract position holdings of a transaction user, to be negatively correlated with the contract exchange rate Ph, and the amount of the second asset B, converted into by the contract position holdings of the transaction user, to be positively correlated with the contract exchange rate Ph in a continuous period of time according to changes of the contract exchange rate Ph by a contract position holding adjustment processor;
storing basic information of the transaction user by a transaction memory; and setting a preset liquidation price for the transaction user by a liquidation processor, and initiating a forced liquidation request to the transaction user at the preset liquidation price by the liquidation processor.

In one embodiment of the present invention, the method further comprises:
enabling the amount of the first asset A or the second asset B, converted into by the contract position holdings of the transaction user, to keep as d times of b/(Ph)^c in a continuous period of time according to changes of c power of Ph, wherein 0<|c|<1, b>0, d>0, and b and c are preset constants.

In one embodiment of the present invention, the method further comprises:
setting an initial asset amplification rate m0 of the transaction user m0 by a asset operational amplifier, wherein the initial asset amplification rate satisfies: Pq /P0= ((m0-1)/m0)^2, wherein Pq is a liquidation price and the P0 is an opening price of the transaction user, and a asset amplification rate of the transaction user is a ratio of the value of the contract position holdings of the transaction user to the value of the transaction user's margin.

In one embodiment of the present invention, the method further comprises:
computing the change of the transaction user's margin converted into the first asset A or the second asset B according to L*(P2^0. 5-P1^0. 5) by the contract position holding adjustment processor, wherein P1 is acontract exchange rate of the first asset A to the second asset B at a first moment, P2 is the contract exchange rate of the first asset A to second asset B at a second moment, and L is the amount of the contract position holdings of the transaction user in the apparatus.

In one embodiment of the present invention, the method further comprises:
calculating the margin amount of the transaction user at the first price Pn according to u=u0*(Pn^0. 5-Pq^0. 5)/(P0^0. 5-Pq^0. 5) by the contract position holding adjustment processor, where u0 is the margin amount of the transaction user at the second set price P0, and the Pq is the liquidation price of the transaction user.

In one embodiment of the present invention, the method further comprises:
receiving a long or short limit order with volume of V contracts at the contract exchange rate Ph of the first asset A to the second asset B by the transaction engine.

In one embodiment of the present invention, the method further comprises:
dividing the transaction user's margin or the contract position holdings into two parts of equal value; and converting one of the two parts into another asset in the related of the contract transaction object according to the spot exchange rate Px by the position holding adjustment processor.

In one embodiment of the present invention, the method further comprises:
creating a non-fungible token for the transaction user by a token manager.

In one embodiment of the present invention, the method further comprises:
setting an initial asset amplification rate m0 of the transaction user by the asset operational amplifier to satisfy: |((m0-1)/m0)^2 - (m0-2)/m0| <11. 11%.

The transaction methods are executed on cloud servers, such as Amazon AWS, Alibaba Cloud and Tencent Cloud, effectively improving transaction processing speed. Of course, the transaction methods may be executed on the blockchain, such as Ethereum, Polkadot, EOS (ENTERPRISE OPERATION SYSTEM), TRON and Cosmo, effectively reducing the asset loss by decentralized smart contracts.

In order to implement the present invention on the blockchain, in an optional embodiment, the apparatus also establishes the following smart contract: a first transaction user locks a margin value of B1 at a contract price P 1 with a contract position holding value of H1 which is an integer multiple of the value of a single contract and creates non-fungible token Coin+(P1,B1,H1) n1, a second transaction user locks a margin value of B2 at a contract price P2 with a contract position holding value of H2 which is an integer multiple of the value of a single contract and creates non-fungible token Coin-(P2,B2,H2) n2.

Due to the limitations of the existing blockchain technology, storing decimals or fractions will occupy a large amount of blockchain resources. Therefore, the embodiment counts the contract position holding value in integers, which can greatly save the resources of the blockchain and improve the convenience of the transaciton users.

When the first transaction user transfers the non-fungible token to the second transaction user, the second transaction user receives n1 Coin+(P1,B1,H1). When P1=P2 and n1>=n2, (n1-n2) non-fungible token Coin±(P1,B1,H1) will be generated and n1 Coin+(P1,B1,H1) and n2 Coin-(P1,B1,H1) will be burned at the same time. At a result, the second transaction user holds (n1-n2) Coin±(P1,B1,H1) and (n1-n2) Coin+(P1,B1,H1).

The second transaction user locks a margin B2 at a contract price P3 and meanwhile, creates (n1-n2) non-fungible token Coin-(P2,B2,H2), wherein (n1-n2) which is an integer multiple of the value of a single contract. When P3 > P1, the (n1-n2) non-fungible token Coin±(P1,B1,H1) and Coin-(P2,B2,H2) in the second transaction user are burned. At same time, profit and loss is settled, and the second transaction user will get profit margin.

It is noted that the term "burned" means that some tokens of user are cleared and his margin is released, and the non-fungible token is corresponding to the amount of the contract margin. This smart contract working mode using the non-fungible token enables each digital currency wallet to have the function of an exchange, which is not only applicable to the apparatus of the present invention, but also applicable to other apparatuses for contract transaction, such as linear contracts, reverse contracts, option contracts and futures contracts.

In one embodiment, the present invention further provides a method for creating a non-fungible token executed by an apparatus for contract transactions consisting of at least one processor, wherein the method comprises:

interacting by an asset amplification contract manager with a amplification contract which involves a first asset A and a second asset B;

setting the asset amplification contract by the asset amplification contract manager so that the amount of the second asset B, converted into by the contract position holdings of a transaction user, is positively correlated with a contract exchange rate Ph of the first asset A to the second asset B by the asset amplification contract manager;

creating the non-fungible token for the transaction user by a token manager, wherein attributes of the non-fungible token at least comprise the amount of the contract position holdings and a contract position holding price of the asset amplification contract for the transaction user.

As we all know, the automatic market maker systems in the prior art record the information by creating fungible token for the transaction users and distinguish different users with different amount of the fungible token. It has to create two different fungible tokens token1 and token2 to record the contract position holdings and the contract position holding price respectively in the prior art, and meanwhile needs to establish their mapping relationship. As a result the contract apparatus would have a high gas fee by creating many sorts of the fungible tokens, traversing to find and calling them . Compared with the automatic market maker system by fungible token in the prior art, the embodiment by creating non-fungible token for the transaction user avoids traversal search and reduces the overhead of the contract transaction apparatus on the blockchain.

In one embodiment of the present invention, the method further comprises: setting an initial asset amplification rate m0 of the asset amplification contract for the transaction user by an asset operational amplifier to satisfy: $P_q/P_0 = ((m_0-1)/m_0)^2$, wherein $P_q$ is a liquidation price and $P_0$ is an opening price of the transaction user; and a asset amplification rate of the transaction user is a ratio of the value of the contract position holdings of the transaction user to the value of the transaction user's margin.

In one embodiment of the present invention, the method further comprises: setting an initial asset amplification rate m0/2 of the asset amplification contract for the transaction user by an asset operational amplifier to satisfy: $P_q/P_0 = ((m_0-2)/m_0)$, wherein $P_q$ is a liquidation price and $P_0$ is an opening price of the transaction user; and a asset amplification rate of the transaction user is a ratio of the value of the contract position holdings of the transaction user to the value of the transaction user's margin.

In one embodiment of the present invention, the method further comprises:

enabling the amount of the first asset A or the second asset B, converted into by the contract position holdings of the amplification contract for the transaction user, to keep as d times of $b/(P_h)^c$ in a continuous period of time by a position holding adjustment processor, wherein $0<|c|<1$, $b>0$, $d>0$, and b and c are preset constants.

In one embodiment of the present invention, the amplification contract is one or more of a linear contract, an inverse contract, an option contract, and a futures contract.

In one embodiment of the present invention, the method further comprises:

splitting the non-fungible token by a token manager.

In one embodiment of the present invention, the method further comprises:

merging at least two of the non-fungible tokens to generate a new non-fungible token.

The merging refers to the process of performing mathematical operations on the same properties of said non-fungible tokens to combine into one non-fungible token.

For example, the attribute of the first non-fungible token comprises L1 long asset amplification contracts and the price of the position contract is P1, and the attribute of the second non-fungible token comprises L2 long asset enlargement contracts and the contract position price is P2, then after the merging, a third non-fungible token will be newly generated, wherein the attribute is (L1+L2) contracts, and the contract position price is (L1*P1+L2*P2)/(L1+L2).

In one embodiment of the present invention, the method further comprises:

creating an amplification asset is created for the transaction user by the asset amplification contract manager for the transaction user according to the asset amplification contract.

In one embodiment of the present invention, the method further comprises:

creating a first amplification asset and a second amplification asset for the transaction user by the asset amplification contract manager according to the asset amplification contract.

The first amplification asset and the second amplification asset are in opposite directions.

The security of the transaction user's assets can be improved by setting two amplification assets in the opposite directions for the same transaction user.

In one embodiment, the present invention also discloses a blockchain system configured to participate in the execution or trigger execution of the method.

In another embodiment of the present invention, to fully implement the apparatus for contract transactions on the blockchain, the apparatus for contract transactions comprises: a contract object manager, wherein the contract object comprises a contract exchange rate Ph of a first asset A to a second asset asset B;

a margin determiner, configured to allow a transaction user to select one of assets thereof as a transaction margin;

an asset pool manager, configured to receive the first asset A and/or the second asset B to deposit in an asset pool;

a transaction engine, configured to execute a transaction between the transaction user and the asset pool after receiving a transaction order from the transaction user to the contract exchange rate Ph;

a spot market processor, available to acquire spot prices of the first asset A and the second asset B or a spot exchange rate Px of the first asset A to the second asset B by initiating a query request to a spot market server gateway;

a user position holding adjustment processor, configured to enable the amount of the first asset A, converted into by the transaction user's and the asset pool's contract position holdings, to be negatively correlated with the contract exchange rate Ph, and the amount of the second asset B, converted into by the transaction user's and the asset pool's contract position holdings, to be positively correlated with the contract exchange rate Ph in a continuous period of time according to the changes of the contract exchange rate Ph.

It is noted that the long or short tansaction users' holdings are sustainable in the continuous period of time, and for example, the holding time of the transaction user is longer than the time of one block of the blockchain of the automatic market maker to ensure the data security of the contract transaction system running on the blockchain;

a transaction data memory, configured to store the basic information of the transaction user; and

an asset pool position holding adjustment processor, configured to initiate a forced increase or decrease of the contract position holdings when the exchange rate reaches a preset value.

Optionally, the increase or decrease of the contract position holdings is equivalent to the process of providing liquidity to or exiting liquidity from automated market makers such as Uniswap. Optionally, the increase or decrease is also an increase or decrease of the contract position holdings.

Optionally, the user position holding adjustment processor is configured to enable the contract position holdings of the transaction user converted into the amount of the first asset A or the second asset B to keep as d times of $b/(Ph)^c$ in a continuous period of time according to changes of c power of the contract exchange rate Ph, wherein $0<|c|<1$, $b>0$, $d>0$, and b and c are preset constants.

In one embodiment, the apparatus further comprises a voucher generator, configured to generate a first voucher after the asset pool manager receives a deposit of the first asset A or the second asset B, or generate a second voucher after a transaction is established between the transaction user and the asset pool, wherein the first voucher is positively correlated with the amount of the first asset A or the second asset B in the asset pool, and the first voucher is configured as a voucher for initiating a withdrawal request to the asset pool; and the second voucher is positively correlated with the transaction user's and the asset pool's contract position holdings in a continuous period of time, and the second voucher is configured as a voucher for releasing the transaction user's margin.

Optionally, the first voucher and the second voucher may be decentralized digital currencies.

Optionally, the amount of asset represented by the first voucher converted into B is greater than or equal to the amount of contract position holdings represented by the second voucher converted into B. Here, the amount of asset represented by the first voucher indicates the amount of asset in the asset pool of the apparatus of the present invention, and then the amount represented by the first voucher. For example, if there is 1000 USDT in an asset pool, the first voucher represents 1000 USDT, and the second voucher represents the amount of the contract position holdings of the transaction user. For example, if the value of a single contract is $P^{0.5}$ USDT, and the contract position holdings represent the amount of asset is 200 USDT if the user's holdings are 20 contracts at P=100 USDT; and the second voucher represents the transaction user's holdings of 200USDT.

Optionally, the apparatus comprises a voucher burner, configured to burn the first voucher or the second voucher after a voucher holder initiates a withdrawal request to the apparatus.

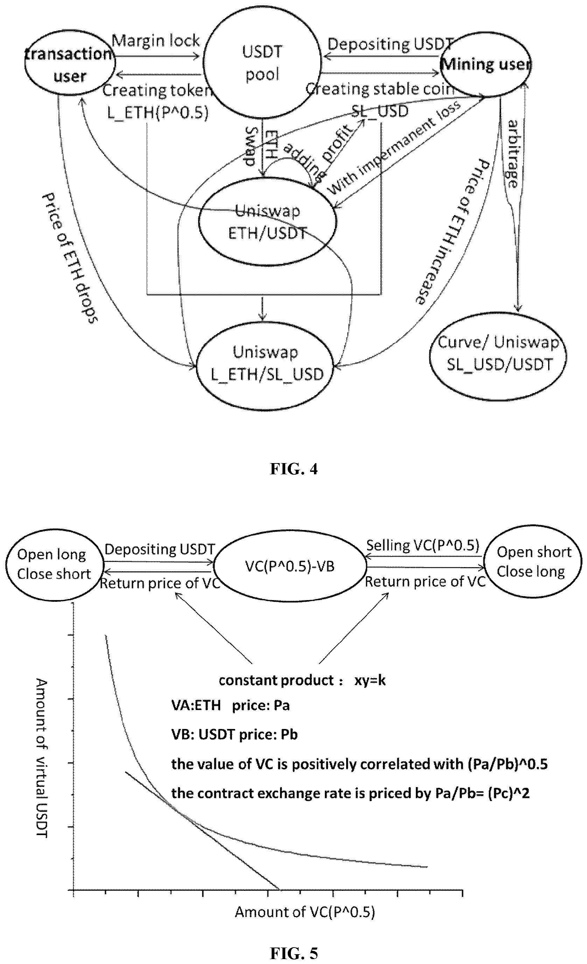

Here is a specific embodiment to explain the working principle of the apparatus. As shown in FIG. 4, taking the digital currencies ETH and USDT as examples, the apparatus generates a corresponding digital currency SL_USD for a liquidity mining user after depositing the digital currency USDT in an asset pool. The SL_USD is a withdrawal voucher, which is equivalent to the first voucher, that is, any user holding SL_USD can initiate a withdrawal request to the apparatus and receive the corresponding amount of digital currency USDT after withdrawing. Then, the apparatus destroys the corresponding amount of digital currency SL_USD at the same time.

A transaction user's margin will be frozen to establish a transaction between the transaction user and a first asset pool after the transaction user initiates a transaction request to the apparatus. The apparatus sets the value of each contract as $P^{0.5}$ USDT, wherein P is the exchange rate of ETH to USDT. The apparatus may further provide amplification trading for the transaction user. For example, the apparatus will will freeze USDT margin of an equivalent value of a 1/5 transaction volume V when the transaction user wants to open V contracts holdings with 5x asset amplification rate.

After receiving the transaction request, the apparatus establishes a transaction between the transaction user and the asset pool, and then the USDT corresponding to the transaction volume (V) will be taken out from the asset pool and sent to the asset pool ETH-USD of automated market makers such as Uniswap to swap the USDT of V/2 for ETH, and then deposit the converted ETH and the remaining USDT of V/2 into the asset pool ETH-USD. At this time, the corresponding amount of digital currency L_ETH is given to the transaction user, and L_ETH is the withdrawal voucher equivalent to the second voucher which any user who holds L_ETH can initiate a request to unfreeze the margin to the apparatus and receive the remaining margin with the corresponding amount of digital currency L-ETH burned.

Since the transaction user only freezes the margin that is less than the transaction volume, the price of the digital currency L_ETH will fluctuate more than ETH. For example, when the transaction user opens position with m times asset amplification rate, which is equal to the opening value/margin value. When m is enough large, such as m>3, then the fluctuation of L_ETH will be about m/2 times that of ETH. Then, L_ETH is equivalent to a amplification digital currency that tracks the price of ETH. In order to further increase the relationship between L_ETH and ETH, the initial asset amplification rate of the transaction user is configured as m0, then $|((m0-1)/m0)^2-(m0-2)/m0| <11. 11\%$. At this time, the rise and fall of L_ETH is nearly same as that of ETH with the highest correlation. For example, if ETH rises by 5%, L_ETH will rise by approximately 15%.

While SL_USD and USDT are equivalent exchanging, SL_USD is equivalent to a stable currency pegged to USDT that is automatically minted through the apparatus. Since the transaction user's margin will change with the price of the ETH and the profit and loss will occur, that is, the transaction user's asset amplification rate will also dynamically change with the price. In order to ensure the stable operation of the transaction system, a preset range (m1, m2) is set for the transaction user's asset amplification rate. When the asset amplification rate of the transaction user exceeds the above preset range, the asset amplification rate of the transaction user is adjusted to be within the preset range through the asset operational amplifier.

Optionally, when m>m2, the apparatus will automatically initiate withdrawal and exchange operations to the automated market maker such as uniswap, and at the same time, swap ETH for USDT and deposit it in the USDT asset pool of the apparatus, which is equivalent to the asset amplification rate of transaction users and the asset pool contract position holdings drop. When m<m1, the apparatus will automatically initiate exchange and deposit operations to the automated market makers such as uniswap, and send USDT to the asset pool ETH-USD of the automated market maker to swap USDT of Vp/2 for ETH, and then deposit the exchanged ETH and the remaining USDT of Vp/2 into the asset pool ETH-USDT, which is equivalent to the asset amplification rate of the transaction user and the asset pool contract position holdings rise.

In order to further increase the activity of the apparatus, an asset pool L_ETH-SL_USD and SL_USD-USDT can be created at the automated market makers such as uniswap to facilitate transactions for relevant holders. When the price of ETH drops, the transaction user is more willing to initiate a transaction request to the apparatus to obtain L_ETH, and sells it to the asset pool L_ETH-SL_USD, and then initiates a withdrawal request to the apparatus to obtain USDT with the exchanged SL_USD. During the above process, the transaction user makes an arbitrage operation to get more USDT before the price of L_ETH-SL_USD remains unchanged. When the price of ETH falls, the opposite operation can be performed. In order to ensure the stability of the SL_USD price, when SL_USD/USDT>preset value p1, the system performs additional issuance of SL_USD in equal proportions. When SL_USD/USDT<the preset value p2, the system performs SL_USD equal deflation.

In some embodiments, the counterparties are both transaction users, and in the present embodiment, one of the counterparties is the transaction user and the other is the asset pool, so it can be implemented without an order book to completely run on the blockchain, thereby allowing the apparatus to completely reduce the impermanent losses and realize the technical effects of issuing decentralized amplification digital currency and stable currency. The amplification asset L_ETH and stable currency SL_USD both have corresponding underlying assets, which can be achieved without an oracle.

In another embodiment, the digital currencies ETH and USDT may also be taken as examples. The apparatus generates a corresponding digital currency SL_ETH for the liquidity mining user after depositing the digital currency ETH in an asset pool. The SL_ETH is a withdrawal voucher, which is equivalent to the first voucher, that is, any user holding SL_ETH can initiate a withdrawal request to the apparatus and receive the corresponding amount of digital currency ETH after withdrawing. Then the apparatus destroys the corresponding amount of digital currency SL_ETH at the same time.

A certain amount of the transaction user's margin will be frozen to establish a transaction between the transaction user and an asset pool after the transaction user initiates a transaction request to the apparatus. The size of the single contract is set to $1/P^0. 5$ ETH, wherein P is the exchange rate of ETH to USDT. The apparatus may furhter provide amplification trading for the transaction user. For example, the apparatus will freeze ETH margin of an equivalent value of the 1/5 transaction volume V when the transaction user wants to open V contracts holdings with 5x asset amplification rate.

After receiving the transaction request, the apparatus establishes a transaction between the transaction user and the asset pool, and then the ETH corresponding to the transaction volume (V) will be taken out from the asset pool and sent to an asset pool ETH-USD of automated market makers such as Uniswap to swap the ETH of V/2 for USDT, and then deposit the converted USDT and the remaining ETH of V/2 into the asset pool ETH-USD. At this time, the corresponding amount of digital currency L_ETH is given to the transaction user, and L_ETH is the withdrawal voucher equivalent to the second voucher which any user who holds L_ETH can initiate a request to unfreeze the margin to the apparatus and receive the remaining margin with the corresponding amount of digital currency L-ETH burned.

Since the transaction user only freezes the margin that is less than the transaction volume, the price of the digital currency L_ETH will fluctuate more than ETH. For example, when the transaction user opens position with m times asset amplification rate, which is equal to the opening value/margin value. When m is enough large, such as m>3, then the fluctuation of L_ETH will be about m/2 times that of ETH. Then L_ETH is equivalent to a amplification digital currency that tracks the price of ETH. In order to further increase the relationship between L_ETH and ETH, the initial asset amplification rate of the transaction user is configured as m0, then $|((m0-1)/m0)^2-(m0-2)/m0| < 11.11\%$. At this time, the rise and fall of L_ETH is nearly same as that of ETH with the highest correlation. For example, if ETH drops by 5%, L_ETH will rise by approximately 15%.

While SL_ETH and ETH are equivalent exchanging, SL_ETH is equivalent to an ETH anchored token automatically minted through the apparatus. Since the transaction user's margin will change with the price of the ETH and the profit and loss will occur, that is, the transaction user's asset amplification rate will also dynamically change with the price. In order to ensure the stable operation of the transaction system, a preset range (m1, m2) is set for the transaction user's asset amplification rate. When the asset amplification rate of the transaction user exceeds the above preset range, the asset amplification rate of the transaction user is adjusted to be within the preset range through the asset operational amplifier.

Optionally, when m>m2, the apparatus will automatically initiate withdrawal and exchange operations to the automated market maker such as uniswap, and at the same time, swap USDT for ETH and deposit it in theETH asset pool of the apparatus, which is equivalent to the asset amplification rate of transaction users and the asset pool contract position holdings drop. When m<m1, the apparatus will automatically initiate exchange and deposit operations to the automated market makers such as uniswap, and send ETH to the asset pool ETH-USD of the automated market maker to swap ETH of Vp/2 for USDT, and then deposit the exchanged USDT and the remaining ETH of Vp/2 into the asset pool ETH-USDT, which is equivalent to the asset amplification rate of the transaction user and the asset pool contract position holdings rise.

In order to further increase the activity of the apparatus, an asset pool L_ETH-SL_USD and SL_ETH-ETH can be created at the automated market makers such as uniswap to facilitate transactions for relevant holders. When the price of ETH rises, the transaction user is more willing to initiate a transaction request to the apparatus to obtain L_ETH, and sells it to the asset pool L_ETH-SL_ETH, and then initiates a withdrawal request to the apparatus to obtain ETH with the exchanged SL_ETH. During the above process, the transaction user makes an arbitrage operation to get more ETH before the price of SL_ETH- ETH remains unchanged. When the price of ETH increases, the opposite operation can be performed. In order to ensure the stability of the SL_ETH price, when SL_ETH/ETH>preset value p1, the system performs additional issuance of SL_ETH in equal proportions. When SL_ETH/ETH<the preset value p2, the system performs SL_ETH equal deflation.

In some embodiments, the counterparties are both transaction users for order book model, and in the present embodiment, one of the counterparties is the transaction user and the other is the asset pool, so it can be implemented without an order book to completely run on the blockchain, thereby allowing the apparatus to completely reduce the impermanent losses and realize the technical effects of issuing decentralized amplification digital currency and stable currency. The amplification asset L_ETH and stable currency SL_ETH both have corresponding underlying assets, which can be achieved without an oracle.

In one embodiment, the present invention also discloses a blockchain system, which is configured to participate in the execution or trigger execution of the executable program in the above-mentioned contract transaction apparatus.

In one embodiment, the present invention further provides a method for creating an amplification asset executed by an apparatus for contract transactions consisting of at least one processor, wherein the method comprises:

> determining a contract transaction object of the amplification asset by a contract object manager, wherein the contract transaction object is related to a spot exchange rate Px of a first asset A to a second asset B;
> acquiring spot prices of the first asset A and the second asset B or the spot exchange rate Px of the first asset A to the second asset B by a spot market processor;
> freezing a transaction user's margin;
> executing a contract transaction between the spot exchange rate Px for a transaction user to open a contract position by a transaction engine;
> adjusting the amount of the first asset A, converted into by contract position holdings of the amplification asset, to be negatively correlated with the spot exchange rate Px, and the amount of the second asset B, converted into by the contract position holdings of the amplification asset, to be positively correlated with the spot exchange rate Px according to changes of the spot exchange rate Px by a position holding adjustment processor; and creating the amplification asset by an amplification asset generator.

In one embodiment of the present invention, the method further comprises: setting an initial asset amplification rate m0 of the amplification asset by a asset operational amplifier, satisfying: $Pq /P0= ((m0-1)/m0)^2$, wherein Pq is a liquidation price and the P0 is an opening price; and a asset amplification rate of the amplification asset is a ratio of the value of the contract position holdings of the amplification asset to the value of the transaction user's margin.

In one embodiment of the present invention, the method further comprises:

generating a first amplification asset and a second amplification asset by the amplification asset generator, whererin the margin of the first amplification asset is the first asset A, and the margin of the second amplification asset is the second asset B.

In one embodiment of the present invention, the method further comprises:

setting the initial asset amplification rate of the amplification asset by the asset operational amplifier to satisfy:

$$|((m0\text{-}1)/m0)^2 - (m0\text{-}2)/m0| <11.\ 11\%.$$

In one embodiment of the present invention, the method further comprises:

making the asset amplification rate of the amplification asset at first price Pn as $m=m0*Pn^0.\ 5/(P0^0.\ 5+m0(Pn^0.\ 5-P0^0.\ 5))$ by the asset operational amplifier。

In one embodiment of the present invention, the method further comprising:

setting the asset amplification rate of the amplification asset to a preset range (m 1, m2) by the asset operational amplifier, wherein m1, m2>1.

When the asset amplification rate of the amplification asset exceeds the preset range, the asset amplification rate of the amplification asset is adjusted to be within the preset range through the asset operational amplifier.

In one embodiment of the present invention, the method further comprises:

creating a first asset pool and a second asset pool for the amplification asset by an asset pool manager, wherein the first asset pool is a margin asset pool, and the second asset pool is a contract position holding asset pool.

In one embodiment of the present invention, the method further comprises: creating a non-fungible token for the amplification asset by a token manager.

In one embodiment of the present invention, the attributes of the non-fungible token at least comprises the amount of the contract position holdings and a contract position holding price of the amplification asset.

In one embodiment, the present invention also discloses a blockchain system configured to participate in the execution or trigger execution of the method.

In order to price the transaction of the counterparty of the transaction user on the blockchain, in one embodiment, the apparatus further comprises a virtual pricing system, comprising a virtual asset VA and a virtual asset VB. The initial reserves of the virtual assets VA and VB are respectively x0 and y0, then x0y0=k, wherein k is a preset value. When the margin is B, in order to determine the transaction of the contract exchange rate Ph of the real assets A and B of the transaction user, the virtual trading system generates z virtual asset VB with the equivalent transaction volume when the apparatus receives a transaction with a transaction user's open position of V, and swap n2 virtual asset VB for n1 virtual asset VA.

It satisfies:

before swap:

$$x0y0=k0;$$

after swap:

$$(x0+n1)\ (y0\text{-}n2)=k0;$$

and
before and after depositing:

$$(y0+z\text{-}n2)/\ (x0+n1)= (z\text{-}n2)/n1,$$

If n1 virtual asset VA and z-n2 virtual asset VB are deposited in the virtual automatic market-making asset pool VA-VB, the exchange rate of the open position contract of the transaction user is Ph=n2/n1.

When the apparatus receives a transaction with a transaction user's closing volume of V, the value converted into the asset B is z, and the virtual market-making transaction system will withdraw n1 virtual asset VA and Z-n2 virtual asset VB from the asset pool VA-VB. Then the apparatus swaps n1 virtual VA varieties for n2 virtual asset VB, and burns z virtual asset VB.

It satisfies:

before and after withdraw:

$$y0/x0 = (y0-z+n2)/ (x0-n1);$$

before swap:

$$(x0-n1)(y0-z+n2)=k1;$$

and

after swap:

$$(x0-n1+n1)( y0-z+n2-n2)=k1.$$

The exchange rate of the closed position contract of the transaction user is Ph =n2/n1 = (y0-z)/x0.

In order to price the matching transaction of the counterparty of the transaction user on the blockchain, in one embodiment, the apparatus further comprises a virtual pricing system. The virtual pricing system comprises a virtual asset VC and a virtual asset VB and creates an asset pool VC-VB, wherein the value of the virtual asset VC is equivalent to d times b/(Ph)^c of the amount of the real asset A, 0<|c|<1,b>0,d>0, and b and c are preset constants. Let's take the digital currencies ETH and USDT as examples to illustrate the working principle of the virtual pricing system. As shown in FIG. 5, the asset A is ETH and the asset B is USDT, the value of a single virtual asset VC is set as P^0. 5 USDT. Then the virtual pricing system comprises the virtual VC(P^0. 5)-virtual USDT of the asset pool, with virtual asset VC reserve x and virtual USDT reserve y, satisfying: xy=k. When the apparatus of the present invention receives a transaction request from the transaction user with the opening positions is v P^0. 5 contracts for long or short, the system buys v virtual asset VC (P^0. 5) from the asset pool VC(P^0. 5)-virtual USDT.

The asset pool satisfies:

before swap:

$$xy=k;$$

and

after swap:

$$(x-v)(y+y1*m)=k,$$

wherein y1 is the contract margin, m is the opening asset amplification rate of users, then: the contract transaction price is Ph=(P^0. 5)^2= (y1*m/v)^2.

According to the above virtual pricing system, it is possible to determine the transaction price of the transaction user's contract transaction without an order book, which is suitable for implementing the apparatus for contract transitions on the blockchain.

The above is only the embodiments of the present invention. It should be pointed out that several improvements and embellishments or combinations can be made by those of ordinary skill in the art without departing from the principle of the present invention, and these improvements and embellishments should also be regarded as the protection scope of the present invention.

**Claims**

1. An apparatus for contract transactions, comprising:

   a contract object manager, configured to manage a contract exchange rate Ph between a first asset A and a second asset B;
   a margin determiner, configured to allow a transaction user to select one of assets thereof as a transaction margin;
   a transaction engine, configured to execute a transaction after receiving a transaction order from the transaction user to the contract exchange rate Ph;
   a user position holding adjustment processor, configured to enable the amount of the first asset A, converted into by contract position holdings of the transaction user, to be negatively correlated with the contract exchange rate Ph, and the amount of the second asset B, converted into by the contract position holdings of the transaction user, to be positively correlated with the contract exchange rate Ph in a continuous period of time according to changes of the contract exchange rate Ph;
   a transaction data memory, configured to store basic information of the transaction user; and
   a liquidation processor, configured to initiate a forced liquidation request to the transaction user at a preset liquidation price.

2. The apparatus of claim 1, further comprising: a spot market processor available to acquire spot prices of the first asset A and the second asset B or a spot exchange rate Px of the first asset A to second asset B by initiating a query request to a spot market server gateway.

3. The apparatus of claim 1, wherein the amount of asset corresponding to a transaction user's margin, converted into by the contract position holdings of the transaction user, is greater than amount of the transaction user's margin.

4. The apparatus of claim 1, wherein the user position holding adjustment processor is configured to enable the amount of the first asset A or the second asset B, converted into by the contract position holdings of the transaction user, to keep as d times of $b/(Ph)^c$ in the continuous period of time according to changes of c power of Ph, wherein $0<|c|<1$, $b>0$, $d>0$, and b and c are preset constants.

5. The apparatus of claim 1, wherein the apparatus runs on a blockchain, and the continuous period of time is a time longer than that of one block on the blockchain.

6. The apparatus of claim 1, wherein the amount of the contract position holdings of the transaction user is L, and the single size of the contract position holdings of the transaction user is between 0. 1 US dollar and 1000 US dollars.

7. The apparatus of any one of claims 1-6, further comprising a asset operational amplifier, wherein an asset amplification rate of the transaction user is a ratio of the value of the contract position holdings of the transaction user to the value of the transaction user's margin, and an initial asset amplification rate of the transaction user is configured as m0, satisfying $Pq/P0=((m0-1)/m0)^2$, wherein Pq is a first set price, and P0 is a second set price.

8. The apparatus of claim 7, wherein the apparatus is further configured to compute a change of the transaction user's margin converted into the first asset A or the second asset B according to $L*(P2^{0. 5}-P1^{0. 5})$, wherein P1 is a contract exchange rate of the first asset A to second asset B at a first moment, P2 is a contract exchange rate of the first asset A to the second asset B at a second moment, and L is the amount of the contract position holdings of the transaction user in the apparatus.

9. The apparatus of claim 7, wherein the asset operational amplifier is further configured to set the asset amplification rate of the transaction user at a first price Pn as $m=m0*Pn^{0. 5}/(P0^{0. 5}+m0(Pn^{0. 5}-P0^{0. 5}))$.

10. The apparatus of claim 7, wherein the amount of the margin of the transaction user at the first price Pn is $u=u0*(Pn^{0. 5}-Pq^{0. 5})/(P0^{0. 5}-Pq^{0. 5})$, wherein u0 is the amount of the margin of the transaction user at the second set price P0, and Pq is a liquidation price of the transaction user.

11. The apparatus of any one of claims 1-6, wherein the initial asset amplification rate of the transaction user satisfies:

$$|((m0-1)/m0)^2 - (m0-2)/m0| < 11.11\%.$$

12. The apparatus of claim 1, wherein the apparatus further creates a non-fungible token for the transaction user, and attributes of the non-fungible token at least comprise the amount of the contract position holdings and a contract position holding price of the transaction user.

13. The apparatus of claim 12, wherein the amount of the contract position holdings is an integer.

14. A blockchain system, wherein the blockchain system is configured to participate in or trigger the execution of executable programs in the apparatus of any one of claims 1-6.

15. The blockchain system of claim 14, the executable programs run in at least one of the following: the contract object manager, the margin determiner, the transaction engine, the spot market processor, the user position holding adjustment processor and the liquidation processor.

16. An apparatus for contract transactions, comprising:

a contract object manager, wherein a contract object comprises a contract exchange rate Ph of first asset A to second asset B;
a margin determiner, configured to configured to allow a transaction user to select one of assets thereof as a transaction margin;
an asset pool manager, configured to receive the first asset A and/or the second B to deposit in an asset pool;
a transaction engine, configured to execute a transaction between the transaction user and the asset pool after receiving a transaction order from the transaction user to the contract exchange rate Ph;
a spot market processor, available to acquire spot prices of the first asset A and the second asset B or a spot exchange rate Px of the first asset A to the second asset B by initiating a query request to a spot market server gateway;
a user position holding adjustment processor, configured to enable the amount of the first asset A, converted into by contract position holdings of the transaction user, to be negatively correlated with the Ph, and the amount of the second asset B, converted into by the contract position holdings of the transaction user, to be positively correlated with Ph in a continuous period of time according to the changes of the contract exchange rate Ph;
a transaction data memory, configured to store basic information of the transaction user; and
an asset pool position holding adjustment processor, configured to initiate a forced increase or decrease of the contract position holdings when the contract exchange rate reaches a preset value.

17. The apparatus of claim 16, wherein the user position holding adjustment processor is configured to enable the amount of first asset A, converted into by contract position holdings of the transaction user, to keep as d times of $b/(Ph)^c$ in a continuous period of time according to changes of c power of the contract exchange rate Ph, wherein $0<|c|<1$, $b>0$, $d>0$, and b and c are preset constants.

18. The apparatus of claim 16, further comprises a voucher generator, configured to generate a first voucher after the asset pool manager receives a deposit of the first asset A or the second asset B, or generate a second voucher after a transaction is established between the transaction user and the asset pool, wherein the amount of the first voucher is positively correlated with the amount of the first asset A or the second asset B in the asset pool, the first voucher is configured as a voucher for initiating a withdrawal request to the asset pool, the amount of second voucher is positively correlated with the transaction user's and the asset pool's contract position holdings in a continuous period of time, and the second voucher is configured as a voucher for releasing the transaction user's margin.

19. The apparatus of claim 18, wherein the amount of asset represented by the first voucher converted into the second asset B is greater than or equal to the amount of contract position holdings represented by the second voucher converted into the second asset B.

20. The apparatus of claim 18, further comprises a voucher burner; configured to burn the first voucher or the second voucher after a voucher holder initiates a withdrawal request to the apparatus.

21. The apparatus of claim 16-20, further comprises an asset operational amplifier that feeds back an asset amplification rate of the transaction user to the liquidation processor, and the asset amplification rate of the transaction user is a ratio of the value of the contract position holdings of the transaction user to the value of the transaction user's margin, wherein an initial asset amplification rate of the transaction user is m0, satisfying $|((m0-1)/m0)^2 -(m0-2)/m0| <11.11\%$.

22. A method for contract transactions executed by an apparatus for contract transactions consisting of at least one processor, comprises:

    determining a contract object by a contract object manager, wherein the contract object comprises a contract exchange rate Ph between a first asset A and a second asset B;
    acquiring spot prices of the first asset A and the second asset B or a spot exchange rate Px of the first asset A to the second asset B by a spot market processor;
    executing a transaction between transaction users for the contract exchange rate Ph by a transaction engine;
    adjusting the amount of the first asset A, converted into by contract position holdings of a transaction user, to be negatively correlated with the contract exchange rate Ph, and the amount of the second asset B, converted into by the contract position holdings of the transaction user, to be positively correlated with the contract exchange rate Ph in a continuous period of time according to changes of the contract exchange rate Ph by a contract position holding adjustment processor;
    storing basic information of the transaction user by a transaction memory; and
    setting a preset liquidation price for the transaction user by a liquidation processor, and
    initiating a forced liquidation request to the transaction user at the preset liquidation price by the liquidation processor.

23. The method of claim 22, further comprises:
enabling the amount of the first asset A or the second asset B, converted into by the contract position holdings of the transaction user, to keep as d times of $b/(Ph)^c$ in a continuous period of time according to changes of c power of Ph by the contract position holding adjustment processor, wherein $0<|c|<1$, $b>0$, $d>0$, and b and c are preset constants.

24. The method of claim 22, further comprises:

    setting an initial asset amplification rate of the transaction user m0 by a asset operational amplifier, wherein the initial asset amplification rate satisfies: $Pq /P0= ((m0-1)/m0)^2$,
    wherein Pq is a liquidation price and the P0 is an opening price of the transaction user, and
    a asset amplification rate of the transaction user is a ratio of the value of the contract position holdings of the transaction user to the value of the transaction user's margin.

25. The method of claim 22, further comprises:
computing the change of the transaction user's margin converted into the first asset A or the second asset B according to $L*(P2^{0.5}-P1^{0.5})$ by the contract position holding adjustment processor, wherein P1 is a contract exchange rate of the first asset A to the second asset B at a first moment, P2 is the contract exchange rate of the first asset A to second asset B at a second moment, and L is the amount of the contract position holdings of the transaction user in the apparatus.

26. The method of claim 22, further comprises:
calculating the margin amount of the transaction user at the first price Pn according to $u=u0*(Pn^{0.5}-Pq^{0.5})/(P0^{0.5}-Pq^{0.5})$ by the contract position holding adjustment processor, where u0 is the margin amount of the transaction user at the second set price P0, and the Pq is the liquidation price of the transaction user.

27. The method of claim 22, further comprises:
receiving a long or short limit order with volume of V contracts at the contract exchange rate Ph of the first asset A to the second asset B by the transaction engine.

28. The method of claim 22, further comprises:
dividing the transaction user's margin or the contract position holdings into two parts of equal value; and converting one of the two parts into another asset in the related of the contract transaction object according to the spot exchange rate Px by the position holding adjustment processor.

**29.** The method of claim 22, further comprises:
creating a non-fungible token for the transaction user by a token manager.

**30.** The method of claim 24, further comprises:
setting an initial asset amplification rate m0 of the transaction user by the asset operational amplifier to satisfy:
$|((m0-1)/m0)^2 - (m0-2)/m0| <11. 11\%$.

**31.** A method for creating an amplification asset executed by an apparatus for contract transactions consisting of at least one processor, wherein the method comprises:

determining a contract transaction object of the amplification asset by a contract object manager, wherein the contract transaction object is related to a spot exchange rate Px of a first asset A to a second asset B;
acquiring spot prices of the first asset A and the second asset B or the spot exchange rate Px of the first asset A to the second asset B by a spot market processor;
freezing a transaction user's margin;
executing a contract transaction between the spot exchange rate Px for a transaction user to open a contract position by a transaction engine;
adjusting the amount of the first asset A, converted into by contract position holdings of the amplification asset, to be negatively correlated with the spot exchange rate Px, and the amount of the second asset B, converted into by the contract position holdings of the amplification asset, to be positively correlated with the spot exchange rate Px according to changes of the spot exchange rate Px by a position holding adjustment processor; and
creating the amplification asset by an amplification asset generator.

**32.** The method of claim 31, further comprises:
setting an initial asset amplification rate m0 of the amplification asset by a asset operational amplifier, satisfying:
$Pq /P0= ((m0-1)/m0)^2$, wherein Pq is a liquidation price and the P0 is an opening price; and a asset amplification rate of the amplification asset is a ratio of the value of the contract position holdings of the amplification asset to the value of the transaction user's margin.

**33.** The method of claim 31, further comprises:
generating a first amplification asset and a second amplification asset by the amplification asset generator, whererin the margin of the first amplification asset is the first asset A, and the margin of the second amplification asset is the second asset B.

**34.** The method of claim 32, further comprises:

setting the initial asset amplification rate of the amplification asset by the asset operational amplifier to satisfy:

$$|((m0-1)/m0)^2 - (m0-2)/m0| <11. 11\%.$$

**35.** The method of claim 32, further comprises:
making the asset amplification rate of the amplification asset at first price Pn as $m=m0*Pn^0. 5/(P0^0. 5+m0(Pn^0. 5-P0^0. 5))$ by the asset operational amplifier.

**36.** The method of claim 32, further comprises:
setting the asset amplification rate of the amplification asset to a preset range (m 1, m2) by the asset operational amplifier, wherein m1, m2>1, and when the asset amplification rate of the amplification asset exceeds the preset range, the asset amplification rate of the amplification asset is adjusted to be within the preset range through the asset operational amplifier.

**37.** The method of claim 32, further comprises:
creating a first asset pool and a second asset pool for the amplification asset by an asset pool manager, wherein the first asset pool is a margin asset pool, and the second asset pool is a contract position holding asset pool.

**38.** The method of claim 31, further comprises:
creating a non-fungible token for the amplification asset by a token manager.

39. The method of claim 38, wherein the attributes of the non-fungible token at least comprises the amount of the contract position holdings and a contract position holding price of the amplification asset.

40. A method for creating a non-fungible token executed by an apparatus for contract transactions consisting of at least one processor, wherein the method comprises:

interacting by an asset amplification contract manager with a amplification contract which involves a first asset A and a second asset B;

setting the asset amplification contract by the asset amplification contract manager so that the amount of the second asset B, converted into by the contract position holdings of a transaction user, is positively correlated with a contract exchange rate Ph of the first asset A to the second asset B by the asset amplification contract manager;

creating the non-fungible token for the transaction user by a token manager, wherein attributes of the non-fungible token at least comprise the amount of the contract position holdings and a contract position holding price of the asset amplification contract for the transaction user.

41. The method of claim 40, further comprises:

setting an initial asset amplification rate m0 of the asset amplification contract for the transaction user by an asset operational amplifier to satisfy: $P_q / P_0 = ((m_0-1)/m_0)^2$, wherein $P_q$ is a liquidation price and $P_0$ is an opening price of the transaction user; and a asset amplification rate of the transaction user is a ratio of the value of the contract position holdings of the transaction user to the value of the transaction user's margin.

42. The method of claim 40, further comprises:
setting an initial asset amplification rate m0/2 of the asset amplification contract for the transaction user by an asset operational amplifier to satisfy: $P_q / P_0 = ((m_0-2)/m_0)$, wherein $P_q$ is a liquidation price and $P_0$ is an opening price of the transaction user; and a asset amplification rate of the transaction user is a ratio of the value of the contract position holdings of the transaction user to the value of the transaction user's margin.

43. The method of claim 40, further comprises:
enabling the amount of the first asset A or the second asset B, converted into by the contract position holdings of the amplification contract for the transaction user, to keep as d times of $b/(Ph)^c$ in a continuous period of time by a position holding adjustment processor, wherein $0<|c|<1$, $b>0$, $d>0$, and b and c are preset constants.

44. The method of claim 40, wherein is one or more of a linear contract, an inverse contract, an option contract, and a futures contract.

45. The method of claim 40, further comprises:
splitting the non-fungible token by a token manager.

46. The method of claim 40, further comprises:
merging at least two of the non-fungible tokens to generate a new non-fungible token.

47. The method of claim 40, further comprises:
creating an amplification asset is created for the transaction user by the asset amplification contract manager for the transaction user according to the asset amplification contract.

48. The method of claim 47, further comprises:
creating a first amplification asset and a second amplification asset for the transaction user by the asset amplification contract manager according to the asset amplification contract. The first amplification asset and the second amplification asset are in opposite directions.

49. A blockchain system , wherein the blockchain system is configured to participate in or trigger the execution of executable programs in the apparatus of any one of claims 16-21.

50. A blockchain system , wherein the blockchain system is configured to participate in the execution or trigger execution of the method of 22-48.

**FIG 1**

**FIG. 2**

**FIG. 3**

**FIG. 4**

**FIG. 5**

constant product : xy=k

VA:ETH price: Pa

VB: USDT price: Pb

the value of VC is positively correlated with $(Pa/Pb)^{0.5}$

the contract exchange rate is priced by $Pa/Pb = (Pc)^2$

## INTERNATIONAL SEARCH REPORT

| International application No. |
| --- |
| **PCT/CN2021/123151** |

### A. CLASSIFICATION OF SUBJECT MATTER

G06Q 40/04(2012.01)i

According to International Patent Classification (IPC) or to both national classification and IPC

### B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, CNKI, WPI, EPODOC: 交易, 合约, 汇率, 保证金, 持仓, 平仓, 负相关, 正相关, 资产, transaction, contract, exchange rate, deposit, silo, inversely related, positively related, asset

### C. DOCUMENTS CONSIDERED TO BE RELEVANT

| Category* | Citation of document, with indication, where appropriate, of the relevant passages | Relevant to claim No. |
| --- | --- | --- |
| PX | CN 112884575 A (ZHANG, Dacheng) 01 June 2021 (2021-06-01)<br>claims 9-15 | 16-21, 49 |
| A | CN 108242023 A (ZHONG'AN INFORMATION TECHNOLOGY SERVICES CO., LTD.)<br>03 July 2018 (2018-07-03)<br>description, paragraphs [0035]-[0049] | 1-50 |
| A | CN 108230147 A (SHENZHEN GTA EDUCATION TECHNOLOGY LTD.) 29 June 2018<br>(2018-06-29)<br>entire document | 1-50 |
| A | CN 104463676 A (CHINA CONSTRUCTION BANK CORPORATION) 25 March 2015<br>(2015-03-25)<br>entire document | 1-50 |
| A | US 2020065904 A1 (CHICAGO MERCANTILE EXCHANGE INC.) 27 February 2020<br>(2020-02-27)<br>entire document | 1-50 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 January 2022** | **17 January 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/123151**

| Patent document cited in search report | | | Publication date (day/month/year) | Patent family member(s) | | | Publication date (day/month/year) |
|---|---|---|---|---|---|---|---|
| CN | 112884575 | A | 01 June 2021 | None | | | |
| CN | 108242023 | A | 03 July 2018 | None | | | |
| CN | 108230147 | A | 29 June 2018 | CN | 108230147 | B | 26 February 2021 |
| CN | 104463676 | A | 25 March 2015 | None | | | |
| US | 2020065904 | A1 | 27 February 2020 | US | 10572939 | B1 | 25 February 2020 |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020111040690

- CN 202011457356X